# FASCICULE DE BREVET EUROPEEN

(11) **EP 0 915 790 B1**
(45) Date de publication et mention de la délivrance du brevet: **11.10.2000**
(21) Numéro de dépôt: 97927230.9
(22) Date de dépôt: 04.06.1997
(51) Int. Cl.: B60T 13/565

(54) **SYSTEME DE FREINAGE ASSISTE A REACTION ASSERVIE**
HILFSKRAFTUNTERSTÜTZTES BREMSSYSTEM MIT GEREGELTER REAKTION
FEEDBACK-CONTROLLED POWER-ASSISTED BRAKING SYSTEM

(30) Priorité: 05.08.1996 FR 9609934
(43) Date de publication de la demande: 19.05.1999
(73) Titulaire: Bosch Systemes de Freinage, 93700 Drancy (FR)
(72) Inventeur: GAUTIER, Jean-Pierre, F-93600 Aulnay-sous-Bois (FR); VERBO, Ulysse, F-93600 Aulnay-sous-Bois (FR); HOUPLAIN, Jacques, F-92400 Courbevoie (FR)
(74) Mandataire: Bentz, Jean-Paul
(86) Numéro de dépôt international: FR9700985
(87) Numéro de publication internationale: WO9805537

(56) Documents cités:
- EP-A- 0 203 704
- EP-A- 0 261 011
- EP-A- 0 283 328
- FR-A- 2 658 466
- US-A- 4 491 058

## Description

La présente invention concerne les systèmes de freinage assisté pour véhicules à moteur, comprenant un maître-cylindre commandant la pression hydraulique dans le circuit de freinage relié aux freins du véhicule, ce maître-cylindre étant susceptible d'être actionné par un servomoteur pneumatique d'assistance lorsque le conducteur du véhicule appuie sur la pédale de freinage.

De façon classique, le maître-cylindre est rempli d'un fluide de freinage et équipé d'un piston hydraulique principal destiné à recevoir une force d'actionnement se composant d'une force d'entrée et d'une force d'assistance agissant toutes deux suivant une direction axiale.

D'autre part, le servomoteur pneumatique d'assistance est susceptible d'être commandé par application de la force d'entrée sur une tige de commande contrôlant l'ouverture d'un clapet, pour exercer la force d'actionnement sur le piston hydraulique principal du maître-cylindre, le servomoteur comportant une enveloppe rigide séparée de façon étanche en deux chambres au moyen d'une cloison mobile susceptible d'être sollicitée par une différence de pression entre les deux chambres résultant de l'ouverture du clapet et d'entraîner un piston pneumatique mobile par rapport à l'enveloppe et portant le clapet, la force d'entrée étant transmise par l'intermédiaire d'un disque de réaction sur lequel s'appuie également le piston pneumatique pour lui fournir une partie au moins de la force d'assistance.

Un dispositif de ce type est bien connu dans l'art antérieur et se trouve par exemple décrit dans le document US-A-4 491 058.

Ces dispositifs de freinage présentent comme avantage, résultant de l'utilisation d'un piston pneumatique mobile par rapport à l'enveloppe rigide, que la course totale disponible pour la tige de commande, donc pour la pédale de frein, est relativement longue, ce qui constitue une condition nécessaire pour assurer le contrôle optimal de la pression du liquide de freinage qui est fournie aux freins du véhicule.

On a développé parallèlement des dispositifs de freinage assisté dans lesquels la réaction s'exerçant sur la tige de commande n'est plus fournie mécaniquement par un disque de réaction, mais par la pression hydraulique régnant dans le maître-cylindre.

Dans ces dispositifs, le piston hydraulique principal du maître cylindre comporte lui-même un cylindre mobile creux, communiquant avec le maître-cylindre, recevant une partie au moins de la force d'assistance, et à l'intérieur duquel coulisse, de façon étanche et suivant la direction axiale, un piston de réaction susceptible de recevoir au moins la force d'entrée, des moyens élastiques exerçant une force élastique entre le piston de réaction et le cylindre mobile et sollicitant le piston de réaction en direction du maître-cylindre, au moins une ouverture étant pratiquée dans le cylindre mobile pour faire communiquer l'intérieur de ce dernier avec l'intérieur du maître-cylindre.

Un tel dispositif se trouve par exemple décrit dans le document FR-A-2 658 466.

Ces dispositifs à réaction hydraulique présentent comme avantage principal que, quelles que soient l'intensité de l'action de freinage ou la vitesse d'application de la force d'entrée, leur courbe caractéristique de fonctionnement, à savoir la courbe donnant la pression dans le maître-cylindre en fonction de l'intensité de la force à l'entrée du servomoteur, est inchangée.

Cependant, tous ces dispositifs de freinage assisté, qu'ils soient à réaction mécanique ou à réaction hydraulique, ne permettent de maîtriser que la pression hydraulique fournie aux freins de roues, mais ils ne permettent pas de prendre en compte tous les paramètres du freinage d'un véhicule automobile.

Un paramètre important intervenant dans le freinage est constitué par le coefficient d'adhérence entre la roue à freiner et le sol sur lequel elle roule. Pendant la durée d'une action de freinage, ce coefficient peut varier dans de grandes proportions, par exemple si le véhicule aborde, pendant que le conducteur freine sur un sol sec, une portion de sol mouillé. L'adhérence des roues sur le sol étant alors notablement inférieure, il existe un risque de blocage des roues, et de dérapage du véhicule.

La présente invention se place dans ce contexte et a pour objet de proposer un système de freinage assisté, dans lequel la sensation ressentie par le conducteur lorsqu'il appuie sur la pédale de frein soit améliorée, et notamment dans lequel le conducteur puisse maîtriser facilement l'évolution d'un paramètre de freinage mieux représentatif de ce freinage que la pression hydraulique envoyée dans les freins, un tel système de freinage devant de plus être d'un coût réduit, tout en ayant un fonctionnement fiable en toutes circonstances.

Dans ce but, la présente invention propose un système de freinage assisté pour véhicule à moteur, comprenant d'une part un maître-cylindre rempli d'un fluide de freinage et équipé d'un piston hydraulique principal destiné à recevoir une force d'actionnement se composant d'une force d'entrée et d'une force d'assistance agissant toutes deux suivant une direction axiale, et d'autre part un servomoteur pneumatique d'assistance susceptible d'être commandé par application de la force d'entrée sur une tige de commande solidaire d'un plongeur contrôlant l'ouverture d'un clapet à trois voies, pour exercer la force d'actionnement sur le piston hydraulique principal, le servomoteur comportant une enveloppe rigide séparée de façon étanche en au moins deux chambres au moyen d'au moins une cloison mobile, susceptible d'être sollicitée par une différence de pression entre les deux chambres résultant de l'ouverture du clapet à trois voies et d'entraîner un piston pneumatique, mobile par rapport à l'enveloppe, portant le clapet à trois voies et contribuant au moins à transmettre la force d'assistance, le piston hydraulique principal du maître cylindre comportant lui-même un cylindre mobile, creux, recevant une partie au moins de la force d'assistance, et à l'intérieur duquel coulisse, de façon étanche et suivant la direction axiale, un piston de réaction susceptible de recevoir au moins la force d'entrée, des moyens élastiques exerçant une force élastique entre le piston de réaction et le cylindre mobile et sollicitant le piston de réaction en direction du maître-cylindre.

Un tel dispositif de freinage assisté est par exemple connu du document EP-B-0 443 886.

Selon la présente invention, le piston de réaction délimite dans le cylindre mobile une chambre de réaction, isolée du volume intérieur du maître-cylindre, et dans laquelle règne la pression hydraulique fournie par au moins un capteur sensible aux variations d'au moins une grandeur physique en réponse aux variations de la force d'entrée.

Grâce à cette disposition, la sensation ressentie par le conducteur lorsqu'il appuie sur la pédale de frein est celle qui est liée à l'évolution de cette grandeur physique, comme par exemple la décélération du véhicule, qu'il est alors plus facile de contrôler.

Selon un mode de réalisation, où le frein de roue comporte au moins un élément de friction susceptible d'être amené en contact de frottement avec un élément tournant solidaire d'une roue du véhicule lorsque la pression de fluide de freinage augmente dans le frein de roue, l'invention prévoit que le piston capteur est en butée sur l'élément de friction sous l'effet de la sollicitation de deuxièmes moyens élastiques.

Selon un autre mode de réalisation, le capteur comporte au moins une masse d'inertie mobile dans une direction parallèle au sens de déplacement du véhicule et susceptible de déplacer le piston capteur dans son alésage.

Selon encore un autre mode de réalisation, le capteur comporte un piston capteur soumis à l'action d'un ressort de suspension associé à un amortisseur du véhicule.

D'autres buts, caractéristiques et avantages de l'invention ressortiront clairement de la description qui suit de modes de réalisation donnés à titre d'exemple nullement limitatifs, en référence aux dessins annexés sur lesquels :
- La Figure 1 représente une vue en coupe d'un dispositif de freinage assisté faisant partie du système de freinage assisté réalisé conformément à la présente invention;
- La Figure 2 représente une vue en coupe à plus grande échelle de la partie centrale du dispositif de la Figure 1;
- La Figure 3 représente une vue en coupe d'un capteur associé et faisant partie du système de freinage assisté selon la présente invention;
- La Figure 4 représente une vue en coupe selon la ligne IV-IV du capteur de la Figure 3;
- La Figure 5 représente la courbe caractéristique de fonctionnement du système de freinage assisté conforme à la présente invention, et représente les variations de la décélération du véhicule en fonction de l'effort appliqué à la pédale de freinage;
- La Figure 6 représente une vue schématique d'un deuxième mode de réalisation d'un capteur associé au dispositif de freinage assisté de la Figure 1;
- La Figure 7 représente une vue schématique d'une variante de réalisation du capteur de la Figure 6;
- La Figure 8 représente une vue en coupe partielle d'une troisième mode de réalisation du capteur associé au dispositif de freinage assisté de la Figure 1, et
- La Figure 9 représente une vue en coupe partielle d'une variante de réalisation du capteur de la Figure 8.

Dans la mesure où l'invention ne concerne qu'un perfectionnement apporté aux systèmes de freinage à assistance pneumatique, et où la constitution générale et le fonctionnement de ces derniers sont bien connus de l'homme de l'art, ces systèmes ne seront rapidement rappelés ici que pour permettre une compréhension totale du perfectionnement que représente l'invention. Schématiquement, un système de ce type comprend un servomoteur 100 et un maître-cylindre 200 destiné à actionner un moteur de frein 300.

Le servomoteur 100 est prévu pour être fixé de façon habituelle sur un tablier (non représenté) de séparation entre un compartiment moteur d'un véhicule et l'habitacle de ce véhicule et pour être actionné par une pédale de freinage (non représentée) située dans cet habitacle. Le maître-cylindre 200 commandant le circuit de freinage hydraulique du véhicule est fixé sur la paroi avant du servomoteur 100.

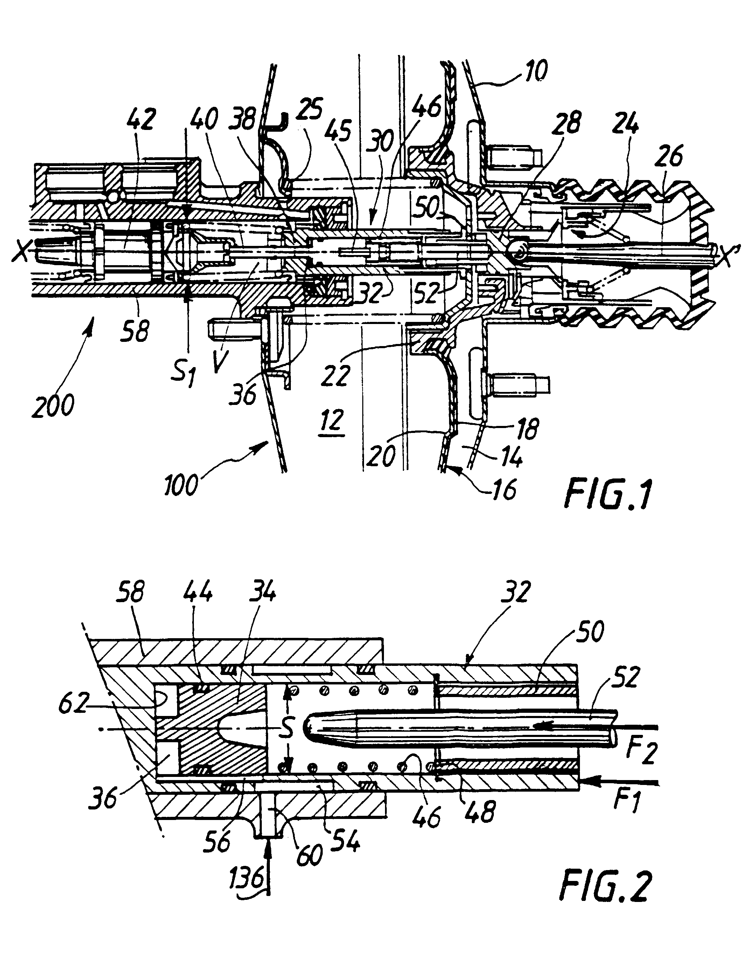

Par convention, on appelle "avant" de l'ensemble servomoteur/maître-cylindre la partie de ce dernier tournée vers le maître-cylindre 200 et "arrière" de cet ensemble la partie tournée vers la pédale de frein 12. Sur les Figures 1 et 2, l'avant est ainsi à gauche et l'arrière à droite.

Le servomoteur 100 comprend lui-même une enveloppe rigide 10 dont le volume intérieur est séparé en une chambre avant 12 et une chambre arrière 14, de façon étanche, par une cloison mobile 16 comprenant une membrane 18 et une jupe rigide 20 et susceptible d'entraîner un piston pneumatique 22 mobile à l'intérieur de l'enveloppe 10.

La chambre avant 12, dont la face avant est fermée de façon étanche par le maître-cylindre 200, est en permanence raccordée à une source de dépression (non représentée). La pression dans la chambre arrière 14 est contrôlée par une valve à trois voies 24, commandée par une tige de commande 26 reliée à la pédale de frein et solidaire d'un plongeur 28.

Lorsque la tige de commande 26 est en position de repos, c'est à dire tirée vers la droite, le clapet 24 établit une communication entre les deux chambres 12 et 14 du servomoteur. La chambre arrière 14 étant alors soumise à la même dépression que la chambre avant 12, le piston 22 est repoussé vers la droite, en position de repos, par un ressort 25.

L'actionnement de la tige de commande 26 vers la gauche a pour effet, dans un premier temps, de déplacer le clapet 24 de façon qu'il isole l'une de l'autre les chambres 12 et 14 puis, dans un deuxième temps, de déplacer ce clapet de façon qu'il ouvre la chambre arrière 14 à la pression atmosphérique.

La différence de pression entre les deux chambres 12 et 14 alors ressentie par la membrane 18 exerce sur la cloison mobile 16 une poussée qui tend à la déplacer vers la gauche et à lui permettre d'entraîner le piston 22 qui se déplace à son tour en comprimant le ressort 25.

L'effort d'assistance au freinage F₁, ou "force d'assistance", résultant de la poussée de la cloison mobile 16, et l'effort de freinage F₂ exercé sur la tige de commande 26, ou "force d'entrée", sont alors appliqués ensemble suivant l'axe X-X' du servomoteur 100 en direction du maître-cylindre 200, et se conjuguent pour constituer la force d'actionnement de ce dernier.

De façon plus précise, la force d'actionnement F₁ est appliquée sur le piston hydraulique principal 30 du maître-cylindre et en provoque le déplacement vers la gauche (sur les Figures 1 et 2) , ce qui entraîne une élévation de pression du liquide de freinage présent dans le volume intérieur V du maître-cylindre 200, et un actionnement du moteur de frein 300 relié à ce dernier, comme cela est bien connu dans la technique du freinage.

Comme on le voit mieux sur la Figure 2, le piston hydraulique principal 30 est en fait composite et comprend d'une part un cylindre 32 mobile et creux, et d'autre part un piston de réaction 34.

Le volume intérieur du cylindre mobile creux 32 est séparé du volume intérieur V du maître-cylindre 200 par une paroi étanche 38, sur laquelle peut être fixé un dispositif 40 de réglage de l'écartement entre le cylindre mobile 32, constituant le piston primaire du maître-cylindre, et le piston secondaire 42 du maître-cylindre.

Le piston de réaction 34 coulisse de façon étanche dans le cylindre mobile 32 grâce à un joint annulaire 44 et délimite avec lui une chambre de réaction 36. De plus, le piston de réaction 34 est sollicité vers l'avant par un ressort 46, prenant appui sur un épaulement 48 du cylindre mobile 32, comme on l'a représenté sur la Figure 1.

Le cylindre mobile 32 est relié, par l'intermédiaire d'une bague 50, à la jupe rigide 20 de manière à recevoir une partie au moins de la force d'assistance F₁ exercée par cette jupe rigide 20. De façon avantageuse comme on le verra plus loin, l'épaulement 48 est formé à l'extrémité avant de la bague 50.

Le piston de réaction 34 est disposé axialement, en regard d'une tige de poussée 52 solidaire du plongeur 28 et susceptible de lui transmettre au moins la force d'entrée F₂ exercée sur la tige de commande 26 elle-même solidaire du plongeur 28.

De plus, le cylindre mobile 32 est formé avec une gorge périphérique 54, reliée par un canal 56 à la chambre de réaction 36. La longueur axiale de la gorge 54 est telle que, quelle que soit la position du cylindre mobile 32 par rapport au corps 58 du maître-cylindre, elle soit toujours en communication avec une ouverture 60 ménagée dans le corps 58. De cette manière, la chambre de réaction est en communication permanente avec l'ouverture 60.

On va maintenant exposer le fonctionnement du système de freinage assisté décrit jusqu'à présent.

Au repos, les différentes pièces mobiles occupent la position représentée sur les Figures 1 et 2, et en particulier le piston de réaction 34 est en butée vers l'avant sur le fond 62 du cylindre mobile 32 sous l'effet de la sollicitation d'un ressort 46. Le clapet 24 autorise la communication entre les deux chambres 12 et 14, qui sont alors à la même pression réduite.

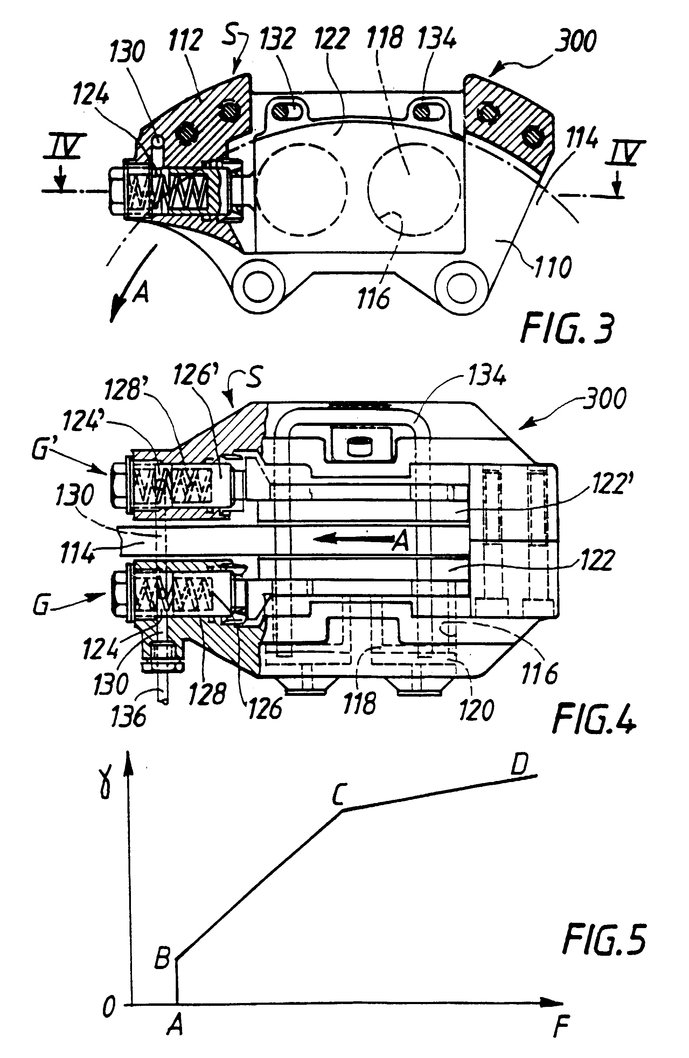

Un premier effort sur la pédale de frein sert à dépasser la précontrainte du ressort de la tige de commande 26 et à amener le clapet 24 dans une position où il isole les deux chambres 12 et 14 l'une de l'autre. Cette augmentation de l'effort sur la pédale de frein ne fournit donc aucune augmentation de pression dans le maître-cylindre, donc aucune décélération du véhicule, et elle est représentée sur la courbe de la Figure 5 par le segment OA. Le réglage de la précontrainte au repos du ressort de la tige de commande permet d'ajuster la longueur du segment OA à toute valeur désirée.

Après cette course prédéterminée de la tige de commande 26, le clapet 24 ouvre à l'atmosphère la chambre arrière 14 du servomoteur 100, et une différence de pressions s'établit entre les deux chambres 12 et 14 du servomoteur. Cette différence de pressions engendre une force d'assistance F₁ qui fait avancer la jupe rigide 20 et le cylindre mobile 32.

La pression hydraulique dans le volume interne V du maître-cylindre 200 s'élève alors et est transmise, par des canalisations (non représentées) aux freins 300.

Dans l'exemple représenté sur les Figures 3 et 4, les freins 300 sont constitués par des freins à disque. De tels freins comportent classiquement un support fixe 110 solidaire d'une partie fixe du véhicule, et un étrier 112 chevauchant un disque tournant 114 solidaire d'une roue du véhicule (non représentée).

L'étrier 112 comporte au moins un cylindre 116 (deux dans l'exemple représenté sur les Figures 3 et 4) dans lequel coulisse de façon étanche un piston 118 en y délimitant une chambre de travail 120.

La pression hydraulique engendrée par le maître-cylindre 200 est communiquée à la chambre 120 et fait avancer le piston 118 vers un élément de friction 122 pour l'amener en contact avec la face en regard du disque 114 et ainsi ralentir sa vitesse de rotation.

Dans le cas où le frein à disque 300 est du type à étrier fixe, il comporte de l'autre côté du disque une autre chambre (non représentée) dans laquelle un autre piston applique un deuxième élément de friction 122' en contact de frottement avec l'autre face du disque 114. Dans le cas où le frein à disque 300 est du type à étrier coulissant, l'étrier 112 applique par réaction l'autre élément de friction 122' sur l'autre face du disque 114.

Il résulte alors de la friction des éléments 122 et 122' sur le disque 114 des efforts appliqués à l'étrier 112 et transmis au châssis du véhicule par l'intermédiaire du support fixe 110. Lorsque le disque 114 tourne dans le sens de la flèche A correspondant à la marche avant du véhicule, les efforts de freinage sont dirigés vers la partie S de l'étrier située en aval par rapport au sens de rotation du disque, c'est à dire vers la partie gauche des Figures 3 et 4. Cette partie S est encore appelée dans la technique partie « en sortie de couple ».

L'étrier 112 est équipé dans cette partie S de capteurs G et G' constitués par des alésages 124 et 124' disposés de part et d'autre du disque 114 et dans lesquels coulissent de façon étanche des pistons capteurs 126 et 126' sollicités par des ressorts 128 et 128' de façon à venir en butée sur les éléments de friction 122 et 122'. Les alésages 124 et 124' définissent ainsi des chambres de capteur, qui sont reliées entre elles par une canalisation 130.

Les éléments de friction 122 et 122' sont montés dans une ouverture de l'étrier 112 et y sont maintenus tout en pouvant s'y déplacer. Les éléments de friction 112 et 122' sont formés avec des lumières oblongues 132 dans lesquelles s'engagent les branches d'une agrafe 134, de façon à assurer le maintien des éléments de friction dans l'étrier.

En fonction des efforts de freinage engendrés par le frottement des éléments de friction 122 et 122' sur les faces opposées du disque 114, les éléments de friction 122 et 122' vont exercer sur les pistons capteurs 126 et 126' des forces proportionnelles à la décélération du véhicule.

En effet, pour un véhicule donné, la décélération de ce véhicule est fonction du couple de freinage fourni par le frein 300, lui-même fonction de la pression de freinage fournie par le maître-cylindre à la chambre de travail 120 du frein, et du coefficient d'adhérence des roues sur le sol.

La force avec laquelle les éléments de friction 122 et 122' sollicitent les pistons capteurs 126 et 126' est elle aussi proportionnelle à la décélération du véhicule puisque les éléments de friction sont soumis d'une part à la pression de freinage communiquée par le piston 118, et d'autre part à la force de traînée de la roue sur le sol, fonction du coefficient d'adhérence de la roue sur le sol, et transmise aux éléments de friction par le disque 114.

La pression dans les chambres 124 et 124' est donc représentative de la décélération du véhicule, et elle est transmise par une canalisation 136 à la chambre de réaction 36 du maître-cylindre 200, et s'exerce sur la section S du piston de réaction 34.

Dans un premier temps, la force engendrée par cette pression s'exerçant sur cette section S ne dépasse pas la précontrainte au repos du ressort 46, de sorte que le piston de réaction 34 reste immobile par rapport au cylindre mobile 32, et à distance de la tige de poussée 52, aucune réaction n'étant alors ressentie sur la pédale de frein. Cette première phase de fonctionnement est représentée par le segment AB de la courbe de la Figure 5, où il y a augmentation de la pression dans le maître-cylindre 200 et dans le frein 300, et donc décélération du véhicule sans variation de la force d'entrée. La longueur du segment AB est appelée le « saut » du servomoteur.

Le saut du servomoteur peut être réglé à toute valeur désirée en ajustant la précontrainte au repos du ressort 46. On peut prévoir par exemple, comme on l'a représenté sur la Figure 1, que la bague 50 soit filetée et vissée dans le cylindre mobile 32 auquel elle transmet une partie au moins de la force d'assistance s'exerçant sur la jupe 20 en appui contre elle.

Le vissage de la bague 50 dans le cylindre mobile 32 a ainsi pour effet de comprimer le ressort 46, donc d'augmenter la précontrainte qu'exerce ce dernier sur le piston de réaction 34 en direction du maître-cylindre, c'est-à-dire encore d'augmenter la valeur du saut.

Pour compenser la réduction de longueur résultant du vissage de la bague 40 dans le cylindre mobile 32, cette bague est par exemple réalisée en deux parties vissées l'une dans l'autre de manière à présenter une longueur totale réglable.

On peut également prévoir que la tige de poussée 42 soit elle-même réalisée en deux parties vissées l'une dans l'autre de manière à présenter une longueur totale réglable, le réglage de cette longueur permettant notamment de modifier l'ouverture du clapet à l'apparition du saut, quelle que soit la valeur donnée à ce dernier par vissage de la bague 40 dans le cylindre mobile 32.

Dans une deuxième phase de fonctionnement, la pression hydraulique augmente dans les chambres 124, 124' et 36, et atteint une valeur prédéterminée, pour laquelle, s'appliquant sur la section S du piston de réaction 34, elle devient suffisante pour vaincre la précontrainte au repos du ressort 46. Le piston de réaction 34 se déplace alors vers l'arrière et vient au contact de la tige de poussée 42, comme illustré par le point B de la courbe de la Figure 5. On pourra avantageusement prévoir une pièce de butée 45 en caoutchouc ou un autre matériau élastomère à l'arrière du piston de réaction 34, et/ou à l'avant de la tige de poussée 42 pour amortir le choc de ce contact et le bruit en résultant.

Le piston de réaction 34 exerce alors sur la tige de poussée 42, et sur la pédale de frein, une force de réaction, dépendant de la pression régnant dans la chambre de réaction 36, et dépendant donc de la décélération du véhicule, s'opposant à la force d'entrée, et permettant donc de contrôler cette décélération par la force d'entrée, comme on l'a représenté par le segment BC sur la courbe de la Figure 5.

La pente de ce segment BC représente le rapport d'assistance du système de freinage. Ce rapport d'assistance est aussi égal au rapport de la section S₁ du cylindre mobile 32 (Figure 1) à la section S du piston de réaction 34.

Le frein 300 équipé de capteurs G et G' sera de préférence situé à l'avant du véhicule. En effet, le freinage par les roues avant du véhicule est toujours plus intense que le freinage par les roues arrière. Les capteurs tels que G et G' fourniront donc une mesure plus précise des paramètres de freinage.

De façon avantageuse, les freins équipant les roues avant du véhicule seront tous munis de capteurs tels que G et G', les chambres de capteurs 124 et 124' étant toutes réunies hydrauliquement par la canalisation 136. De cette manière, la pression régnant dans la chambre de réaction 36 représentera la moyenne des pressions engendrées par les capteurs situés sur les freins des roues avant droite et gauche.

La force d'assistance atteint son maximum lorsque la pression dans la chambre arrière du servomoteur atteint la pression atmosphérique, et ne peut donc plus augmenter. On atteint alors le phénomène connu sous le nom de saturation, et représenté par le point C sur la courbe de la Figure 5.

Au-delà du point C, c'est à dire sur le segment CD, la force d'assistance F₁ reste constante, et toute augmentation de la décélération du véhicule est obtenue par une augmentation correspondante de la force d'entrée F₂.

Le fonctionnement du système de freinage que l'on vient de décrire se reproduit à chaque action de freinage, quelle que soit la vitesse d'application de la force d'entrée sur la tige de commande 26.

Lorsque le conducteur relâche son effort, le rétablissement de la communication, par l'intermédiaire du clapet 24, entre les chambres avant et arrière a pour effet de faire reculer la cloison mobile 16 et le cylindre mobile 32 sous l'effet du ressort 25, et de faire baisser la pression dans le volume intérieur V du maître-cylindre. Cette baisse de pression est communiquée à la chambre de travail 120 des freins 300, et il en résulte une diminution de la décélération du véhicule.

Il en résulte également une baisse de pression dans les chambres 124 et 124' des capteurs G et G', qui est communiquée à la chambre de réaction 36 du maître-cylindre par la canalisation 136. Le ressort 46 repousse alors vers l'avant le piston de réaction 34, et les différentes pièces mobiles reprennent alors leur position de repos illustrée sur les Figures 1 à 4.

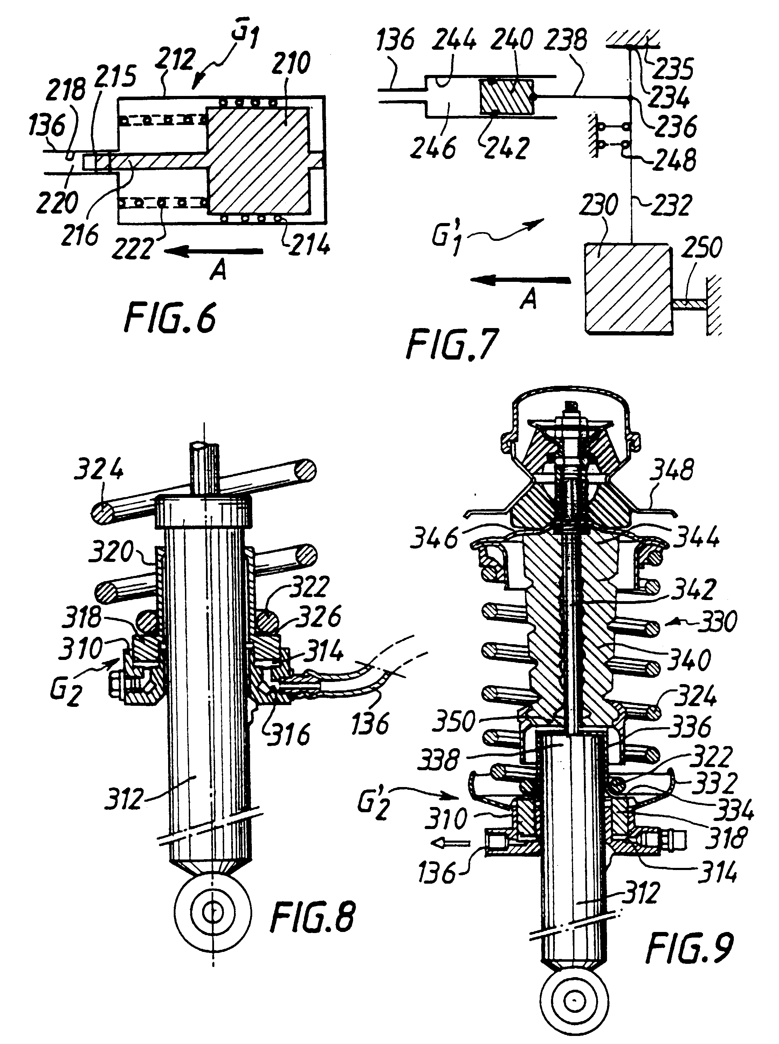

On a représenté sur la Figure 6 un deuxième mode de réalisation du capteur décrit plus haut, plus particulièrement destiné aux cas où l'on souhaite bénéficier des avantages de la présente invention, mais où l'on ne désire pas modifier les freins de roues existant sur un véhicule.

Selon ce deuxième mode de réalisation, le capteur G₁ est constitué d'une masse d'inertie 210, susceptible de se déplacer dans un logement 212, par exemple par l'intermédiaire d'un roulement à billes ou à rouleaux 214. Le logement 212 est disposé dans le véhicule de telle sorte que son axe soit parallèle à la direction de déplacement du véhicule.

La masse d'inertie 210 est solidaire vers l'avant d'un piston 216 coulissant de façon étanche grâce à au moins un joint annulaire 215 dans un alésage 218 formant la chambre de capteur 220, reliée par la canalisation 136 à la chambre de réaction 36. La masse d'inertie 210 est de plus sollicitée vers l'arrière du véhicule par un ressort 222, de façon à venir en butée contre le fond arrière du logement 212.

Comme dans le mode de réalisation précédent, lors d'une action de freinage, et en fonction de l'intensité de cette action de freinage, la masse d'inertie 210 sera plus ou moins sollicitée vers l'avant du véhicule (Flèche A sur la Figure 6). Dans ce mouvement, elle déplace le piston capteur 216 qui comprime à son tour le fluide contenu dans la chambre de capteur 220, reliée par la canalisation 136 à la chambre de réaction 36. Le fonctionnement du système de freinage assisté est alors conforme au fonctionnement qui a déjà été décrit.

Selon la variante représentée sur la Figure 7, le capteur G'₁ comporte une masse d'inertie 230 est solidaire d'une extrémité d'un levier 232 articulé par son autre extrémité 234 sur une partie fixe 235 du châssis ou de la carrosserie du véhicule. En un point intermédiaire 236 du levier 232 est articulée une extrémité d'une biellette 238 articulée par son autre extrémité sur un piston 240. Les axes des articulations 234 et 236 sont horizontaux et perpendiculaires à la direction de déplacement du véhicule.

La masse d'inertie 230 ou le levier 232 sont sollicités vers l'arrière par un ressort 248 de traction ou, comme on l'a représenté, un ressort de compression, de façon à venir en butée vers l'arrière sur une partie fixe 250 du châssis ou de la carrosserie du véhicule. De plus, lorsque le véhicule est à l'arrêt ou roule à vitesse constante sur un sol horizontal, le levier 232 est sensiblement vertical dans cette position en butée sur la partie fixe 250.

Le piston 240 coulisse de façon étanche grâce à au moins un joint 242 dans un alésage 244 formant chambre de capteur 246 reliée à la chambre de réaction 36 par la canalisation 136.

Selon cette variante, lors d'une action de freinage, et en fonction de l'intensité de cette action de freinage, la masse d'inertie 230 sera plus ou moins sollicitée vers l'avant du véhicule (Flèche A sur la Figure 7), en adoptant un mouvement de rotation autour de l'articulation 234. Dans ce mouvement, grâce à la biellette 238, elle imprime un mouvement de translation au piston 240, qui comprime à son tour le fluide contenu dans la chambre de capteur 246, reliée par la canalisation 136 à la chambre de réaction 36. Le fonctionnement du système de freinage assisté est alors conforme au fonctionnement qui a déjà été décrit.

Selon le mode de réalisation illustré sur la Figure 8, le capteur G₂ comprend un collier annulaire 310 monté fixe sur un amortisseur 312 et présente une gorge annulaire 314 reliée à la canalisation 136 par un passage 316. L'amortisseur 312 est associé à une roue avant du véhicule. Un piston annulaire 318 est monté à coulissement étanche dans la gorge annulaire 314 et comporte un manchon tubulaire 320 qui est disposé avec un faible jeu autour de l'amortisseur 312. Une extrémité 322 du ressort de suspension 324 vient en appui contre une surface annulaire 326 du piston annulaire 318.

Lors d'une action de freinage, la charge supportée par l'amortisseur avant 312 du véhicule augmente en fonction de l'intensité du freinage et de la décélération qui en résulte, ce phénomène étant connu sous le nom de « transfert de charge ». Cette augmentation de la charge sur l'amortisseur avant provoque une variation correspondante de la force exercée par le ressort de suspension 324 sur le piston annulaire 318, entraînant une variation de la pression effective dans chambre de capteur formée par la gorge annulaire 314. Cette variation de pression est transmise par la canalisation 136 à la chambre de réaction 36. Le fonctionnement du système de freinage assisté est alors conforme au fonctionnement qui a déjà été décrit.

Selon la variante représentée sur la Figure 9, l'élément de suspension 330 comporte un élément d'appui 332 qui est monté à coulissement autour de l'amortisseur 312 et qui est en butée contre le piston annulaire 318 du capteur G'₂. L'élément d'appui 332 comporte une partie annulaire 334 sur laquelle vient en appui l'extrémité 322 du ressort de suspension 324, et une partie cylindrique 336 qui entoure une extrémité 338 de l'amortisseur 312. L'élément de suspension 330 comporte de plus un manchon 340 en matériau élastomère disposé autour d'une tige du piston 342 de l'amortisseur 312 et dont une extrémité 344 est montée fixe sur une plaque de support 346 solidaire du châssis 348 du véhicule.

Le manchon 340 a une longueur telle que, quand le véhicule sur lequel le dispositif est monté est à l'arrêt ou roule à vitesse constante, l'extrémité 350 est située à faible distance de l'élément d'appui 332. Dans ces conditions, seul l'effort du ressort de suspension 324 est transmis au piston annulaire 318. Si la charge de l'amortisseur 312 augmente du fait d'une décélération du véhicule, l'amortisseur 312 est comprimé et l'extrémité 350 du manchon 340 vient en butée contre la partie 336 de l'élément d'appui 332 pour exercer une force supplémentaire sur le piston annulaire 318. Il en résulte une augmentation de pression dans la chambre de capteur 314, transmise par la canalisation 136 à la chambre de réaction 36.

Comme dans le premier mode de réalisation, les amortisseurs équipant les roues avant du véhicule seront de préférence tous munis de capteurs tels que G₂ ou G'₂, les chambres de capteurs 314 étant toutes réunies fluidiquement par la canalisation 136. De cette manière, la pression régnant dans la chambre de réaction 36 représentera la moyenne des pressions engendrées par les capteurs situés sur les amortisseurs des roues avant droite et gauche.

L'avantage de ce troisième mode de réalisation réside dans le fait qu'un paramètre supplémentaire est pris en compte pour améliorer la sensation ressentie par le conducteur lorsqu'il appuie sur la pédale de frein. En effet, la décélération mesurée par l'intermédiaire de capteurs tels que G₂ ou G'₂ tient compte de la pression de freinage engendrée par le maître-cylindre, de l'adhérence des roues avant sur le sol, et également de la charge totale supportée par l'essieu avant. Cette charge peut être variable, dans le cas par exemple d'un véhicule à propulsion arrière et possédant un coffre à bagages à l'avant.

On a donc bien réalisé, selon la présente invention, un système de freinage assisté qui présente des caractéristiques de fonctionnement améliorées, puisqu'il permet au conducteur du véhicule de contrôler de façon très précise la décélération de son véhicule, et donc d'adapter son effort de freinage en fonction de l'adhérence instantanée des roues du véhicule sur le sol. Les moyens utilisés pour obtenir ce résultat sont relativement simples, et sont donc de coût réduit et de fonctionnement fiable en toutes circonstances.

On voit également que l'ensemble chambre de réaction 36 / canalisation 136 / chambres de capteur 124, 124' contient un volume constant et fermé de fluide. Il en résulte que l'homme de l'art pourra choisir librement la section S de la chambre de réaction 36 et les sections des chambres de capteurs 124 et 124' pour changer la pente du segment BC de la courbe de la Figure 5 sans changer les autres conditions de fonctionnement.

Bien entendu, la présente invention est susceptible de recevoir de nombreuses variantes qui apparaîtront à l'homme du métier, et qui rentrent dans le cadre de la présente invention. C'est ainsi par exemple que l'invention pourra être appliquée aussi bien sur des freins à disque à étrier fixe ou à étrier coulissant que sur des freins à tambour. De même, le servomoteur utilisé pourra être simple ou en tandem.

## Revendications

1. Système de freinage assisté pour véhicule à moteur, comprenant d'une part un maître-cylindre (200) rempli d'un fluide de freinage et équipé d'un piston hydraulique principal (30) destiné à recevoir une force d'actionnement se composant d'une force d'entrée (F₂) et d'une force d'assistance (F₁) agissant toutes deux suivant une direction axiale (X-X') pour engendrer une augmentation de pression du fluide de freinage dans au moins un frein de roue (300), et d'autre part un servomoteur pneumatique d'assistance (100) susceptible d'être commandé par application de la force d'entrée (F₂) sur une tige de commande (26) solidaire d'un plongeur (28) contrôlant l'ouverture d'un clapet à trois voies (24), pour exercer la force d'actionnement (F₁) sur le piston hydraulique principal (30), le servomoteur comportant une enveloppe rigide (10) séparée de façon étanche en au moins deux chambres (12, 14) au moyen d'au moins une cloison mobile (16), susceptible d'être sollicitée par une différence de pression entre les deux chambres (12, 14) résultant de l'ouverture du clapet à trois voies (24) et d'entraîner un piston pneumatique (22), mobile par rapport à l'enveloppe (10), portant le clapet à trois voies (24) et contribuant au moins à transmettre la force d'assistance (F₁), le piston hydraulique principal (30) du maître cylindre (200) comportant lui-même un cylindre mobile (32), creux, recevant une partie au moins de la force d'assistance (F₁), et à l'intérieur duquel coulisse, de façon étanche et suivant la direction axiale, un piston de réaction (34) susceptible de recevoir au moins la force d'entrée (F₂), des moyens élastiques (46) exerçant une force élastique entre le piston de réaction (34) et le cylindre mobile (32) et sollicitant le piston de réaction (34) en direction du maître-cylindre (200), **caractérisé en ce que** le piston de réaction (34) délimite dans le cylindre mobile (32) une chambre de réaction (36), isolée du volume intérieur (V) du maître-cylindre (200), et dans laquelle règne la pression hydraulique fournie par au moins un capteur (G, G'; G₁, G'₁; G₂, G'₂) sensible aux variations d'au moins une grandeur physique en réponse aux variations de la force d'entrée (F₂).

2. Système de freinage assisté selon la revendication 1, caractérisé en ce que la chambre de réaction (36) communique en permanence avec une ouverture (60) ménagée dans le corps (58) du maître-cylindre (200) par un canal (56) formé dans le cylindre mobile (32) débouchant dans une gorge périphérique (54) du cylindre mobile (32) susceptible de se déplacer devant l'ouverture (60).

3. Système de freinage assisté selon la revendication 2, caractérisé en ce que le capteur (G, G'; G₁, G'₁; G₂, G'₂) comporte au moins un alésage (124, 124'; 218, 244; 314) dans lequel coulisse de façon étanche un piston capteur (126, 126'; 216, 240; 318) définissant une chambre de capteur (124, 124'; 218, 244; 314) reliée par une canalisation (136) à la chambre de réaction (36) du cylindre mobile (32).

4. Système de freinage assisté selon la revendication 3, dans lequel le frein de roue (300) comporte au moins un élément de friction (122, 122') susceptible d'être amené en contact de frottement avec un élément tournant (110) solidaire d'une roue du véhicule lorsque la pression de fluide de freinage augmente dans le frein de roue (300), caractérisé en ce que le piston capteur (126, 126') est en butée sur l'élément de friction (122, 122') sous l'effet de la sollicitation de deuxièmes moyens élastiques (128, 128').

5. Système de freinage assisté selon la revendication 4, caractérisé en ce que l'élément tournant (110) est solidaire d'une roue avant du véhicule.

6. Système de freinage assisté selon la revendication 5, caractérisé en ce que l'élément tournant (110) est un disque.

7. Système de freinage assisté selon la revendication 3, caractérisé en ce que le capteur (G₁, G'₁) comporte au moins une masse d'inertie (210, 230) mobile dans une direction parallèle au sens de déplacement du véhicule et susceptible de déplacer le piston capteur (216, 240) dans son alésage (218, 240).

8. Système de freinage assisté selon la revendication 7, caractérisé en ce que la masse d'inertie (230) est solidaire d'un levier (232) articulé (234) sur une partie fixe (235) du véhicule, une biellette (238) étant articulée (236) sur le levier (232) et sur le piston capteur (240).

9. Système de freinage assisté selon la revendication 3, caractérisé en ce que le capteur (G₂, G'₂) comporté un piston capteur (318) pourtant à l'action d'un ressort (324) de suspension associé à un amortisseur (312) du véhicule.

10. Système de freinage assisté selon la revendication 9, caractérisé en ce que l'amortisseur (312) est associé à au moins une roue avant du véhicule.

## Claims

1. Boosted braking system for a motor vehicle, comprising on the one hand a master cylinder (200) full of brake fluid and equipped with a main hydraulic piston (30) intended to receive an actuating force composed of an input force (F₂) and of a boost force (F₁) both acting in an axial direction (X-X') so as to cause an increase in pressure in the brake fluid in at least one wheel brake (300), and on the other hand a pneumatic booster (100) which can be controlled by application of the input force (F₂) to a control rod (26) integral with a plunger (28) controlling the opening of a three-way valve (24) so as to exert the actuating force (F₁) on the main hydraulic piston (30), the booster including a rigid casing (10) divided in leaktight fashion into at least two chambers (12, 14) by means of at least one moving partition (16) which can be acted upon by a difference in pressure between the two chambers (12, 14) resulting from the opening of the three-way valve (24) and drive along a pneumatic piston (22) which can move with respect to the casing (10), carrying the three-way valve (24) and contributing at least to transmitting the boost force (F₁), the main hydraulic piston (30) of the master cylinder (200) itself including a hollow moving cylinder (32) receiving at least some of the boost force (F₁) and inside which there slides, in leaktight fashion and in the axial direction, a reaction piston (34) which can receive at least the input force (F₂), elastic means (46) exerting an elastic force between the reaction piston (34) and the moving cylinder (32) and urging the reaction piston (34) towards the master cylinder (200), **characterized in that** the reaction piston (34) delimits in the moving cylinder (32) a reaction chamber (36) isolated from the interior volume (V) of the master cylinder (200) and in which the hydraulic pressure supplied by at least one sensor (G, G'; G₁, G'₁; G₂, G'₂) sensitive to variations in at least one physical magnitude in response to the variations in the input force (F₂) prevails.

2. Boosted braking system according to Claim 1, characterized in that the reaction chamber (36) permanently communicates with an opening (60) made in the body (58) of the master cylinder (200) via a duct (56) formed in the moving cylinder (32) emerging in a peripheral groove (54) of the moving cylinder (32) capable of moving past the opening (60).

3. Boosted braking system according to Claim 2, characterized in that the sensor (G, G'; G₁, G'₁; G₂, G'₂) includes at least one bore (124, 124'; 218, 244; 314) in which there slides in leaktight fashion a sensor piston (126, 126'; 216, 240; 318) defining a sensor chamber (124, 124'; 218, 244; 314) connected by a pipe (136) to the reaction changer (36) of the moving cylinder (32).

4. Boosted braking system according to Claim 3, in which the wheel brake (300) includes at least one friction pad (122, 122') which can be brought into frictional contact with a rotating element (110) integral with a wheel of the vehicle when the brake fluid pressure in the wheel brake (300) increases, characterized in that the sensor piston (126, 126') is in abutment on the friction pad (122, 122') under the effect of urging from second elastic means (128, 128').

5. Boosted braking system according to Claim 4, characterized in that the rotating element (110) is integral with a front wheel of the vehicle.

6. Boosted braking system according to Claim 5, characterized in that the rotating element (110) is a disc.

7. Boosted braking system according to Claim 3, characterized in that the sensor (G₁, G'₁) includes at least one inertial mass (210, 230) which can move in a direction parallel to the direction of travel of the vehicle and is able to shift the sensor piston (216, 240) in its bore (218, 240).

8. Boosted braking system according to Claim 7, characterized in that the inertial mass (230) is integral with a lever (232) articulated (234) on a stationary part (235) of the vehicle, a connecting rod (238) being articulated (236) on the lever (232) and on the sensor piston (240).

9. Boosted braking system according to Claim 3, characterized in that the sensor (G₂, G'₂) includes a sensor piston (318) subjected to the action of a suspension spring (324) associated with a damper (312) of the vehicle.

10. Boosted braking system according to Claim 9, characterized in that the damper (312) is associated with at least one front wheel of the vehicle.

## Patentansprüche

1. System zum unterstützten Bremsen für ein Kraftfahrzeug, das einerseits einen Hauptzylinder (200), der mit einem Bremsfluid gefüllt und mit einem Haupthydraulikkolben (30) ausgestattet ist, der zur Aufnahme einer Betätigungskraft bestimmt ist, die sich aus einer Eingangskraft (F₂) und einer Hilfskraft (F₁) zusammensetzt, die alle beide längs einer axialen Richtung (X-X') wirken, um eine Druckerhöhung des Bremsfluids in wenigstens einer Radbremse (300) zu erzeugen, und andererseits einen pneumatischen Unterstützungsservomotor (100) aufweist, der durch Aufbringen der Eingangskraft (F₂) auf eine mit einem Tauchkolben (28) fest verbundene Steuerstange (26) gesteuert werden kann, der das Öffnen eines Dreiwegeventils (24) kontrolliert, um die Betätigungskraft (F₁) auf den Haupthydraulikkolben (30) auszuüben, wobei der Servomotor eine starres Gehäuse (10) aufweist, das auf dichte Weise in wenigstens zwei Kammern (12, 14) mittels wenigstens einer beweglichen Trennwand (16) unterteilt ist, die durch eine Druckdifferenz zwischen den beiden Kammern (12, 14) beaufschlagt werden kann, die sich aus dem Öffnen des Dreiwegeventils (24) ergibt, und einen bezüglich des Gehäuses (10) beweglichen Pneumatikkolben (22) antreiben kann, der das Dreiwegeventil (24) trägt und zur Übertragung der Hilfskraft (F₁) wenigstens beiträgt, wobei der Haupthydraulikkolben (30) des Hauptzylinders (200) seinerseits einen hohlen beweglichen Zylinder (32) aufweist, der wenigstens einen Teil der Hilfskraft (F₁) aufnimmt und in dessen Innerem dicht und längs der axialen Richtung ein Reaktionskolben (34) gleitet, der wenigstens die Eingangskraft (F₂) aufnehmen kann, wobei elastische Mittel (46) zwischen dem Reaktionskolben (34) und dem beweglichen Zylinder (32) eine elastische Kraft ausüben und den Reaktionszylinder (34) in Richtung des Hauptzylinders (200) beaufschlagen, **dadurch gekennzeichnet, daß** der Reaktionszylinder (34) in dem beweglichen Zylinder (32) eine Reaktionskammer (36) abgrenzt, die von dem Innenvolumen (V) des Hauptzylinders (200) isoliert ist und in der der Hydraulikdruck herrscht, der von wenigstens einem Fühler (G, G'; G₁, G'₁; G₂, G'₂) geliefert wird, der gegenüber den Veränderungen wenigstens einer physikalischen Größe in Reaktion auf Veränderungen der Eingangskraft (F₂) empfindlich ist.

2. System zum unterstützten Bremsen nach Anspruch 1, dadurch gekennzeichnet, daß die Reaktionskammer (36) ständig mit einer in dem Körper (58) des Hauptzylinders (200) vorgesehenen Öffnung (60) über einen Kanal (56) in Verbindung steht, der in dem beweglichen Zylinder (32) gebildet ist und in eine Umfangsrille (54) des beweglichen Zylinders (32) mündet, die sich vor der Öffnung (60) verschieben kann.

3. System zum unterstützten Bremsen nach Anspruch 2, dadurch gekennzeichnet, daß der Fühler (G, G'; G₁, G'₁; G₂, G'₂) wenigstens eine Bohrung (124, 124'; 218, 244; 314) aufweist, in der auf dichte Weise ein Fühlerkolben (126, 126'; 216, 240; 318) gleitet, der eine Fühlerkammer (124, 124'; 218, 244; 314) bildet, die durch eine Leitung (136) mit der Reaktionskammer (36) des beweglichen Zylinders (32) verbunden ist.

4. System zum unterstützten Bremsen nach Anspruch 3, bei welchem die Radbremse (300) wenigstens ein Reibungselement (122, 122') aufweist, das mit einem sich drehenden Element (110), das mit einem Rad des Fahrzeugs fest verbunden ist, in Reibkontakt gebracht werden kann, wenn der Bremsfluiddruck in der Radbremse (300) ansteigt, dadurch gekennzeichnet, daß der Fühlerkolben (126, 126') unter der Wirkung der Beaufschlagung von zweiten elastischen Mitteln (128, 128') an dem Reibungselement (122, 122') anliegt.

5. System zum unterstützten Bremsen nach Anspruch 4, dadurch gekennzeichnet, daß das sich drehende Element (110) mit einem Vorderrad des Fahrzeugs fest verbunden ist.

6. System zum unterstützten Bremsen nach Anspruch 5, dadurch gekennzeichnet, daß das sich drehende Element (110) eine Scheibe ist.

7. System zum unterstützten Bremsen nach Anspruch 3, dadurch gekennzeichnet, daß der Fühler (G₁, G'₁) wenigstens eine Trägheitsmasse (210, 230) aufweist, die in einer zur Verschiebungsrichtung des Fahrzeugs parallelen Richtung beweglich ist und den Fühlerkolben (216, 240) in seiner Bohrung (218, 240) verschieben kann.

8. System zum unterstützten Bremsen nach Anspruch 7, dadurch gekennzeichnet, daß die Trägheitsmasse (230) mit einem an einem festen Teil (235) des Fahrzeugs angelenkten (234) Hebel (232) fest verbunden ist, wobei ein Schwingarm (238) an dem Hebel (232) und dem Fühlerkolben (240) angelenkt (236) ist.

9. System zum unterstützten Bremsen nach Anspruch 3, dadurch gekennzeichnet, daß der Fühler (G₂, G'₂) einen Fühlerkolben (318) aufweist, der der Wirkung einer Tragfeder (324) ausgesetzt ist, die einem Stoßdämpfer (312) des Fahrzeugs zugeordnet ist.

10. System zum unterstützten Bremsen nach Anspruch 9, dadurch gekennzeichnet, daß der Stoßdämpfer (312) wenigstens einem Vorderrad des Fahrzeugs zugeordnet ist.
